# FASCICULE DE BREVET EUROPEEN

(11) **EP 2 211 047 B1**
(45) Date de publication et mention de la délivrance du brevet: **19.12.2018**
(21) Numéro de dépôt: 10151454.5
(22) Date de dépôt: 22.01.2010
(51) Int. Cl.: F02M 25/00

(54) **Dispositif d'alimentation en carburant, pour véhicules automobiles, comprenant des moyens d'apport contrôle d'additifs**
Kraftstoffversorgungsanlage für Kraftfahrzeuge mit Mitteln zur kontrollierten Abgabe eines Zusatzstoffes
Fuel supply system for motor vehicles comprising means for controlled delivery of an additive

(30) Priorité: 23.01.2009 FR 0950418
(43) Date de publication de la demande: 28.07.2010
(73) Titulaire: TI Automotive Fuel Systems SAS, 51009 Châlons-en-Champagne (FR)
(72) Inventeur: Fromont, Jean-Sébastien, 51520 Sarry (FR); Renard, Eric, 51510 Compertrix (FR)
(74) Mandataire: Regimbeau

(56) Documents cités:
- EP-A- 1 491 379
- DE-C1- 4 028 253
- FR-A- 882 518
- FR-A- 2 886 647

## Description

La présente invention concerne le domaine des dispositifs d'alimentation en carburant embarqués sur véhicules automobiles.

Plus précisément, la présente invention concerne les dispositifs d'alimentation en carburant comprenant des moyens d'apport contrôlé d'additifs.

L'injection d'additifs dans le carburant peut remplir différentes fonctions connues de l'homme de l'art.

Dans le cas de moteurs diesels, les additifs sont généralement destinés à réduire la formation de suie lors de la combustion du gasoil et/ou abaisser la température d'auto-inflammation des suies, ou plus généralement encore à lubrifier le combustible liquide.

La présente invention n'est pas limitée à ces applications mais englobe celles-ci.

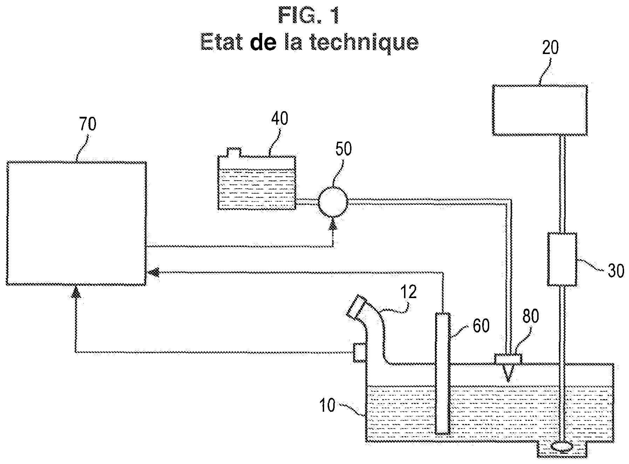

On a illustré sur la figure 1 annexée, un système connu. On aperçoit sur la figure 1 annexée un réservoir 10 de carburant, un moteur à combustion 20, une pompe 30 qui prélève du carburant dans le réservoir 10 et l'envoie au moteur 20, un réservoir d'additifs 40, une pompe 50 associée au réservoir d'additifs 40, une jauge 60 qui mesure le niveau de carburant dans le réservoir 10 et un calculateur 70 qui reçoit des informations notamment en provenance de la jauge 60 et qui pilote la pompe 50 de sorte que celle-ci dirige une quantité dosée d'additifs prélevés dans le réservoir 40 vers un injecteur 80 porté par la paroi supérieure du réservoir 10 afin d'introduire dans le réservoir 10 une quantité d'additif proportionnelle à la quantité de carburant introduite dans le réservoir 10 par la tubulure de remplissage 12.

On trouvera un descriptif de diverses variantes d'un tel système dans les documents EP-A-1031707, WO2008/078038, WO2007/090978, FR-A-2834006, US-A-4621593 et DE-A-3626419.

On a décrit dans le document EP-0614002 une variante de réalisation préconisant une injection d'additifs via un organe de pulvérisation directement dans le volume de carburant afin de générer un brassage énergique du mélange additifs-carburant, et ce même lorsque le véhicule est à l'arrêt.

Le document FR-A-2668203 décrit une autre variante de réalisation selon laquelle l'injection d'additifs est réalisée par l'intermédiaire d'une conduite reliant le réservoir à la partie de refoulement de la pompe d'injection de carburant.

On a en outre décrit dans le document EP-A-0269228 une autre technique fort complexe selon laquelle l'injection d'additifs est effectuée "en temps réel", en fonction de la consommation de carburant instantané dans le moteur.

Le document DE 4028253 présente un dispositif d'alimentation en carburant pour véhicule, comprenant un réservoir, un moyen d'injection contrôlé d'additifs dans le réservoir muni d'un clapet disposé à proximité du fond du réservoir, ce clapet étant piloté par des moyens de commande.

Au vu de cet état de la technique, la présente invention a pour but de proposer une nouvelle solution technique permettant d'améliorer la situation.

Ce but est atteint dans le cadre de la présente invention grâce à un dispositif tel que défini dans la revendication 1.

L'effet technique résultant, grâce à l'invention est d'assurer la distribution en additif dans le fond du réservoir tout en assurant que l'injecteur à clapet soit automatiquement refermé afin que le contenu du réservoir ne pénètre pas dans le moyen d'injection.

D'autres caractéristiques, buts et avantages de la présente invention apparaîtront à la lecture de la description détaillée qui va suivre et en regard des dessins annexés, donnés à titre d'exemples non limitatifs et sur lesquels :
- la figure 1 précédemment décrite représente un mode de réalisation conforme à l'état de la technique,
- la figure 2 représente schématiquement un mode de réalisation conforme à la présente invention,
- la figure 3 représente schématiquement une première variante de réalisation conforme à la présente invention, et
- la figure 4 représente une autre variante de réalisation conforme à la présente invention.

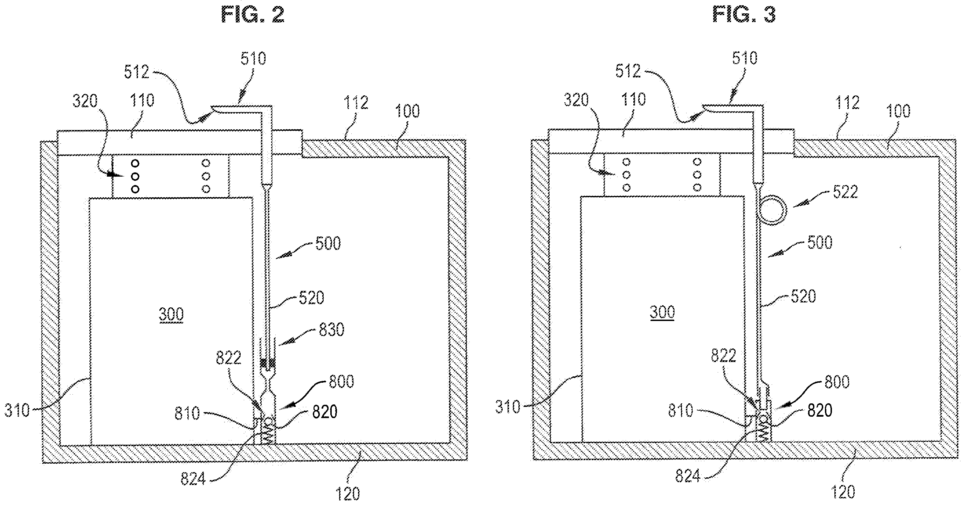

On aperçoit sur la figure 2 annexée, un réservoir 100 destiné à contenir du carburant pour véhicules automobiles.

La structure et la géométrie d'un tel réservoir 100 peuvent faire l'objet de nombreux modes de réalisation et ne seront pas décrites dans le détail par la suite.

Une embase 110 est fixée sur la paroi supérieure 112 du réservoir 100. L'embase 110 porte par tout moyen approprié, un module 300 qui remplit des fonctions de filtrage, puisage et jaugeage de carburant. De nombreux modules 300 sont connus de l'homme de l'art. La structure du module 300 ne sera donc pas décrite dans le détail par la suite.

On notera que de préférence, le module 300 comprend un bol de réserve 310 sollicité vers le fond 120 du réservoir 100 à partir de l'embase 110 par tout moyen approprié, par exemple à l'aide d'un organe élastique schématisé sous la référence 320 sur la figure 2.

Le dispositif illustré sur la figure 2 comprend en outre un ensemble de tuyaux d'alimentation 500 conçu pour diriger un volume dosé d'additifs prélevé dans un réservoir d'additifs, vers un injecteur 800.

L'ensemble de tuyaux 500 comprend un tronçon 510 porté par l'embase 110 et traversant celle-ci. L'entrée 512 de ce tronçon 510 est reliée par tout moyen approprié à la sortie d'une unité de dosage associée au réservoir d'additif. Pour simplifier l'illustration, le réservoir d'additifs et l'unité de dosage associée ne seront pas représentés sur les figures annexées.

L'ensemble 500 comprend en outre un tronçon 520 qui s'étend au moins sensiblement verticalement le long du bol de réserve 310 et est relié à son extrémité inférieure à l'entrée d'un injecteur à clapet 800. Comme on le voit sur la figure 2, selon l'invention, l'injecteur à clapet 800 est placé à proximité du fond 120 du réservoir 100.

L'injecteur 800 est ainsi placé à l'extérieur du bol 310 en une zone éloignée du puisage. Selon le mode de réalisation représenté sur la figure 2, l'injecteur à clapet 800 est relié mécaniquement par tout moyen approprié, schématisé sous la référence 810, à la base du bol 310. On obtient ainsi une indexation automatique du clapet injecteur 800 sur le fond 120 du réservoir 100 grâce à la liaison sur le bol de réserve 310 lui-même indexé sur le fond.

La disposition qui précède permet de bien maîtriser la localisation de l'injection d'additifs. Par ailleurs, le lien mécanique entre le clapet injecteur 800 et le bol de réserve 310 assure un montage rapide dans le réservoir de carburant 100. En effet, le clapet injecteur 800 est automatiquement mis en place grâce à sa liaison sur le bol 310, lors de l'installation de ce bol.

Comme indiqué précédemment, le contact direct de l'injecteur d'additifs avec le carburant, et ce de manière permanente, permet de réduire les problèmes de collage existant dans l'art antérieur en évitant le séchage éventuel de l'additif.

Le clapet injecteur 800 peut en lui-même faire l'objet de nombreux modes de réalisation. De préférence, il comprend un élément de clapet 820 sollicité à la fermeture contre un siège 822 par un organe élastique 824. La pression d'additifs appliquée à l'intérieur du conduit 520 relié au siège 122, lorsqu'une injection d'additifs est demandée, sollicite l'obturateur 820 en éloignement du siège 822 à l'encontre de la sollicitation de l'organe élastique 824 pour ouvrir le clapet 800 et permettre l'injection. Une fois la phase d'injection terminée, l'organe élastique 824 referme le clapet 800 jusqu'à la prochaine injection.

On notera que de préférence, au moins une partie du tronçon 520 de l'ensemble de tuyaux d'alimentation présente un diamètre réduit, typiquement compris entre 0,2 et 1 mm, très préférentiellement de l'ordre de 0,3 mm. Cette disposition permet d'éviter la stagnation d'éventuelles bulles d'air, formées par exemple par dégazage de l'additif, dans les conduites d'alimentation. En effet, grâce au diamètre fin présent dans cette partie du tronçon d'alimentation, toute bulle d'air éventuelle est automatiquement chassée à l'extérieur par une injection d'additifs.

Pour garantir l'indexation du clapet injecteur 800 sur le fond 120 du réservoir 100 malgré les déformations éventuelles du réservoir et les variations éventuelles de compression du module 300, selon le mode de réalisation représenté sur la figure 2, il est prévu une jonction glissante entre l'extrémité inférieure du tronçon 520 de conduite d'alimentation et l'entrée du clapet injecteur 800. Cette jonction glissante en translation est référencée 830 sur la figure 2. Elle est formée par un montage télescopique avec joint d'étanchéité intercalé entre l'extrémité inférieure du tronçon d'alimentation 520 et l'entrée du clapet injecteur 800.

On a représenté sur la figure 3 une variante de réalisation conforme à la présente invention qui se distingue de celle représentée sur la figure 2, et précédemment décrite, par le fait que la jonction glissante en translation 830 illustrée sur la figure 2 est remplacée par un tronçon en serpentin 522 formé sur le segment d'alimentation 520 pour permettre un libre allongement du tuyau d'alimentation entre le tronçon 510 porté par l'embase 110 et le clapet injecteur 800, sous l'effet de déformations éventuelles du réservoir 100.

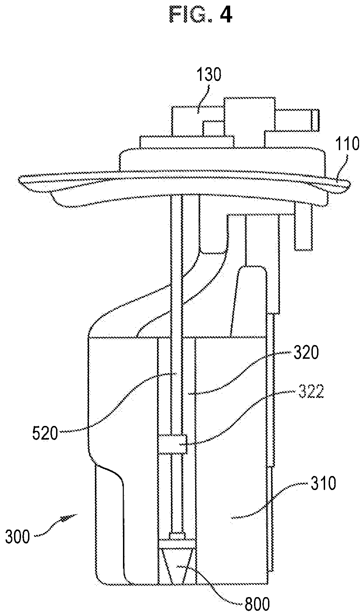

On a représenté sur la figure 4 annexée, un autre mode de réalisation conforme à l'invention. On aperçoit sur cette figure un module 300 comprenant un bol de réserve 310 porté par une embase 110. Selon cette variante de réalisation, le tuyau vertical d'alimentation 520, qui porte à son extrémité inférieure le clapet injecteur 800, est placé dans une gorge verticale 320 formée sur la surface extérieure du bol 310. Le tronçon de tuyau d'alimentation 520 est porté par l'embase 110. Il débouche dans une tubulure ou pipette d'alimentation 130 externe (qui remplace le tronçon 510), elle-même reliée par tout moyen approprié à la sortie de l'unité de dosage d'additifs.

Le tronçon d'alimentation 520 monté coulissant dans la gorge 320 est de préférence maintenu en position par une patte 322 venue de matière sur le bol de réserve 310 et obturant au moins partiellement le contour d'ouverture de la gorge 320.

Bien entendu, la présente invention n'est pas limitée aux modes de réalisation particuliers qui viennent d'être décrits mais s'étend à toutes variantes conformes au cadre de la présente invention selon les revendications annexées.

## Revendications

1. Dispositif d'alimentation en carburant pour véhicules automobiles comprenant un réservoir de carburant (100), un moyen (800) d'injection contrôlé d'additifs dans le réservoir (100) comprenant un injecteur à clapet placé à proximité du fond (120) du réservoir, ledit dispositif étant **caractérisé par le fait que** l'injecteur (800) comprend un organe de clapet (820) sollicité vers un siège de clapet (822) par un organe élastique (824).

2. Dispositif selon la revendication 1, **caractérisé par le fait que** l'injecteur à clapet (800) est fixé à la base d'un bol (310) d'un module à fonction de puisage.

3. Dispositif selon la revendication 2, **caractérisé par le fait que** le bol de réserve (310) est indexé sur le fond (120) du réservoir.

4. Dispositif selon l'une des revendications 1 à 3, **caractérisé par le fait qu'**il est prévu une fonction coulissante télescopique étanche (830) entre un conduit d'alimentation et l'entrée de l'injecteur à clapet (800).

5. Dispositif selon l'une des revendications 1 à 4, **caractérisé par le fait qu'**un tronçon de conduit d'alimentation (520) situé en amont de l'injecteur à clapet (800) comprend au moins un élément de serpentin (522) permettant un allongement de la liaison.

6. Dispositif selon la revendication 1, **caractérisé par le fait que** l'injecteur à clapet (800) est fixé à l'extrémité d'un élément de tuyau d'alimentation (520) porté par une embase (510).

7. Dispositif selon la revendication 6, **caractérisé par le fait que** le tronçon de tuyau d'alimentation (520) qui porte l'injecteur à clapet (800) est monté à coulissement dans une gorge (320) formée sur la surface extérieure d'un bol de réserve (310).

8. Dispositif selon la revendication 7, **caractérisé par le fait que** le tronçon de tuyau d'alimentation (520) placé dans la gorge (320) du bol de réserve (310) est maintenu par une patte (322) venue de matière sur le bol de réserve (310).

9. Dispositif selon l'une des revendications 1 à 8, **caractérisé par le fait qu'**au moins un segment du tronçon d'alimentation situé en amont du clapet injecteur (800) possède un diamètre interne compris entre 0,2 et 1 mm, de préférence de l'ordre de 0,3 mm.

## Patentansprüche

1. Versorgungsvorrichtung für Kraftfahrzeuge mit Kraftstoff, umfassend einen Kraftstofftank (100), ein kontrolliertes Einspritzmittel (800) für Zusatzstoffe in den Tank (100), umfassend eine Einspritzvorrichtung mit Klappe, die in der Nähe des Bodens (120) des Tanks angeordnet ist, wobei die genannte Vorrichtung durch die Tatsache gekennzeichnet ist, dass die Einspritzvorrichtung (800) ein Klappenorgan (820) umfasst, das von einem elastischen Organ (824) in Richtung zu einem Klappensitz (822) angesprochen wird.

2. Vorrichtung gemäß Anspruch 1, **gekennzeichnet durch** die Tatsache, dass die Einspritzvorrichtung mit Klappe (800) an der Basis einer Schale (310) eines Moduls mit Schöpffunktion befestigt ist.

3. Vorrichtung gemäß Anspruch 2, **gekennzeichnet durch** die Tatsache, dass die Reserveschale (310) auf dem Boden (120) des Tanks indexiert ist.

4. Vorrichtung gemäß einem der Ansprüche 1 bis 3, **gekennzeichnet durch** die Tatsache, dass eine abgedichtete, teleskopische, gleitende Funktion (830) zwischen einem Versorgungsleiter und dem Eingang der Einspritzvorrichtung mit Klappe (800) vorgesehen ist.

5. Vorrichtung gemäß einem der Ansprüche 1 bis 4, **gekennzeichnet durch** die Tatsache, dass ein der Einspritzvorrichtung mit Klappe (800) vorgeschalteter Versorgungsleiterabschnitt (520) wenigstens ein Rohrschlangenelement (522) umfasst, das eine Verlängerung der Verbindung zulässt.

6. Vorrichtung gemäß Anspruch 1, **gekennzeichnet durch** die Tatsache, dass die Einspritzvorrichtung mit Klappe (800) am Ende eines von einem Sockel (510) getragenen Versorgungsrohrelements (520) befestigt ist.

7. Vorrichtung gemäß Anspruch 6, **gekennzeichnet durch** die Tatsache, dass der Versorgungsrohrabschnitt (520), der die Einspritzvorrichtung mit Klappe (800) trägt, gleitend in einer Auskehlung (320) montiert ist, die auf der äußeren Oberfläche einer Reserveschale (310) geformt ist.

8. Vorrichtung gemäß Anspruch 7, **gekennzeichnet durch** die Tatsache, dass der in der Auskehlung (320) der Reserveschale (310) platzierte Versorgungsrohrabschnitt (520) von einer Klaue (322) aus demselben Material auf der Reserveschale (310) gehalten wird.

9. Vorrichtung gemäß einem der Ansprüche 1 bis 8, **gekennzeichnet durch** die Tatsache, dass wenigstens ein Segment des der Einspritzvorrichtung mit Klappe (800) vorgeschalteten Versorgungsabschnitts einen zwischen 0,2 und 1 mm, bevorzugt in der Größenordnung von 0,3 mm inbegriffenen Innendurchmesser besitzt.

## Claims

1. Fuel feed device for automotive vehicles comprising a fuel reservoir (100), a means (800) for controlled injection of additives into the reservoir (100) comprising a valve injector located close to the bottom (120) of the tank, said device being **characterised by** the fact that the injector (800) comprises a valve element (820) forced towards a valve seat (822) by an elastic element (824).

2. Device according to claim 1, **characterised by** the fact that the valve injector (800) is fixed to the base of a bowl (310) of a module with a draw-off function.

3. Device according to claim 2 **characterised by** the fact that the reserve bowl (310) is indexed on the bottom (120) of the reservoir.

4. Device according to one of claims 1 to 3, **characterised by** the fact that a sealed telescopic sliding function (830) is provided between a feed pipe and the inlet of the valve injector (800).

5. Device according to one of claims 1 to 4, **characterised by** the fact that a length of feed pipe (520) located upstream of the valve injector (800) comprises at least one coil element (522) which allows the connection to be lengthened.

6. Device according to claim 1, **characterised by** the fact that the valve injector (800) is fixed to the end of an element of feed pipe (520) supported by a base (510).

7. Device according to claim 6 **characterised by** the fact that the length of feed pipe (520) which carries the valve injector (800) is mounted so that it slides in a channel (320) formed on the external surface of a reserve bowl (310).

8. Device according to claim 7 **characterised by** the fact that the length of feed pipe (520) placed in the channel (320) of the reserve bowl (310) is held by a foot (322) which forms an integral part of the reserve bowl (310).

9. Device according to one of claims 1 to 8 **characterised by** the fact that at last one segment of the length of feed pipe located upstream of the injector valve (800) has an internal diameter of between 0.2 and 1 mm, preferably of the order of 0.3 mm.
